Europäisches Patentamt

(19) European Patent Office

Office européen des brevets

(11) Publication number: **0 139 621**

**A1**

(12) **EUROPEAN PATENT APPLICATION**

(21) Application number: **84850258.9**

(22) Date of filing: **06.09.84**

(51) Int. Cl.⁴: **B 65 B 9/02**
**B 65 B 53/06**

(30) Priority: **09.09.83 SE 8304838**

(43) Date of publication of application:
**02.05.85 Bulletin 85/18**

(84) Designated Contracting States:
**AT BE CH DE FR GB IT LI LU NL**

(71) Applicant: **Meco-Pak Aktiebolag**
**Box 114**
**S-44123 Alingsäs(SE)**

(72) Inventor: **Andersson, Bernt Ludvig**
**Kavlasvägen 16**
**S-44123 Alingsas(SE)**

(74) Representative: **Norin, Klas et al,**
**Kooperativa förbundet Patent Department P.O. Box**
**15200**
**S-104 65 Stockholm(SE)**

(54) **Apparatus for welding together plastic-film webs.**

(57) Apparatus for welding together two plastic-film webs (40,41) laid around one or more articles, so as to form a heat-shrinkable envelope therearound. The apparatus includes a deck (12), on which the wrapped articles are moved to an oven (53), in which the film is heated. A first and a second welding jaw (16,26) are arranged to weld the plastic-film webs around the articles, to form a package unit (13). A guide track (15) is arranged to guide the first welding jaw (16) in a path which has an initial first section (23) extending substantially at right angles to the support surface (12) and a second, arcuate section (24) which terminates in a position which extends substantially parallel with the support surface. The film is stretched about the unit (13) during movement of the first welding jaw (16) along the support surface (12), whereafter the second welding jaw (26) is moved up through an opening (25) in the support surface, to weld the two plastic-film webs together.

Fig. 2

Apparatus for welding together plastic-film webs

The present invention relates to apparatus for welding together two plastic-film webs placed around an article, or around a group of articles, such as to form a heat-shrinkable envelope therearound, said apparatus including an article support structure and a first and second welding jaw, of which at least the first jaw can be moved to bring the plastic-film webs together and to effect said weld in clamping action with the second welding jaw.

Such apparatus are normally used to produce large, contained packages, containing a plurality of smaller articles, but can also be used to wrap a single article in a protective envelope of plastic film. In this respect, the article or articles to be packaged is or are firstly loosely wrapped in a web of plastic film and then moved into a heating oven, where the film is heated, so that it shrinks and clings firmly around said article or articles, to form a containing envelope therearound.

Because they consume large quantities of energy, such ovens are expensive to run. In addition, they require a large amount of space, since the heat treatment to which the plastic film is subjected requires a given period of time to effect and the machine must, at the same time, be capable of receiving further packages for treatment during this period of time.

Consequently, one object of the invention is to provide shrink film packaging apparatus which consume less energy and require less space than the aforesaid known apparatus, while retaining the working capacity of said apparatus, or achieving an even higher working capacity, and while maintaining the quality of the shrink-film wrapper. Accordingly, this invention consists in apparatus for welding together two plastic-film webs wrapped around one or more articles to form a heat-shrinkable envelope therearound, comprising a support structure having a support surface for supporting said article, or a group of said articles; a first and a second welding jaw, of which jaws at least the first is movable from a starting position above said support surface in a manner to bring the film webs together and to weld said webs in clamping co-action with the second jaw, wherein said apparatus further includes guide means arranged to guide the first welding jaw towards the second welding jaw along a path which is terminated in a path section of such configuration that part thereof extends along the support surface, such that said first welding jaw during its movement along said terminal path section is brought into abutment with said wrapped article or articles.

So that the invention will be more readily understood and further features thereof made apparent, the invention will now be described with reference to the accompanying drawings, in which
Figure 1 is a perspective view of apparatus according to the invention;
Figures 2 and 3 are schematic side view of the apparatus illustrated in Figure 1, and
Figure 4 is an overall view of a wrapping and packaging machine incorporating apparatus according to the invention.

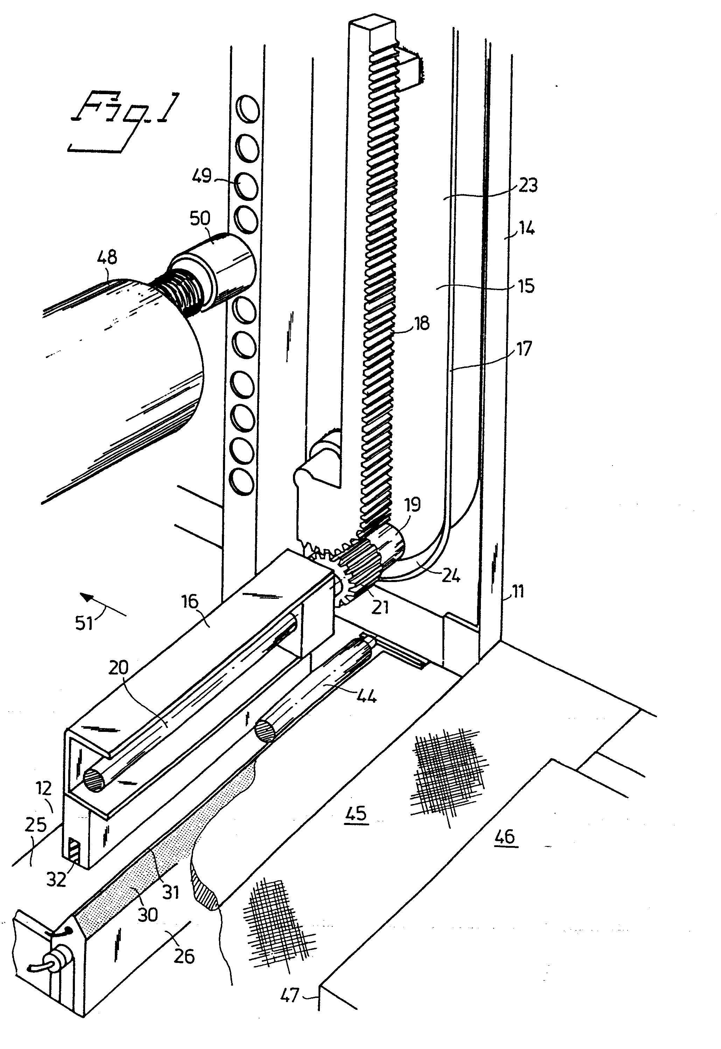

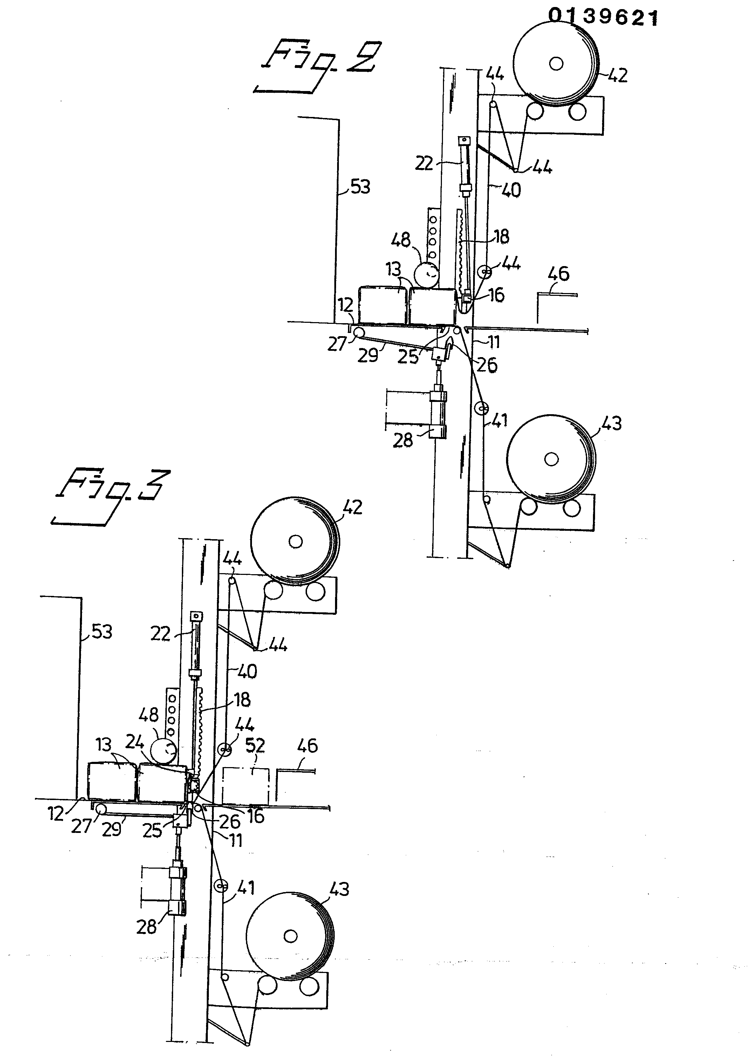

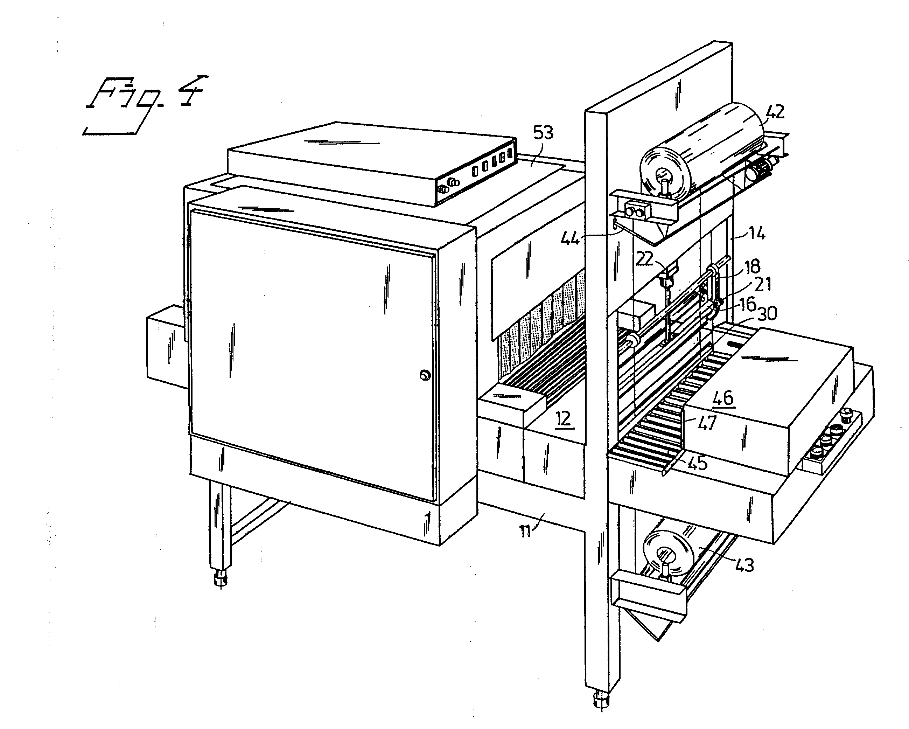

The illustrated embodiment of the apparatus according to the invention includes a support structure 11 comprising a substantially horizontal deck 12, which serves as a support for packaged units 13 (Fig. 2). The support structure further comprises a vertical frame part 14 on each side of the deck 12, of which frame parts only one is shown in the Figures. Arranged on each frame part 14 is a track 15 for guiding a first welding jaw 16 in a movement path between a first position, located above the packaged units, and a second position, located adjacent the deck, this latter position being shown in Figures 1 and 3. The guide track 5 has the form of a smooth and even rail 17 and a rack 18 which co-acts with a toothed wheel or pinion 21 mounted on stud 19, for movement of the pinion along the rack. Each stud 19 of the illustrated embodiment comprises the end part of a shaft 20 extending through the first welding jaw 16. The engagement between the pinion 21 and the rack 18 on each of the frame parts 14 holds the first welding jaw 16 fully parallel with the horizontal as the jaw is moved along the track 15, this movement being effected with the aid of a first piston-cylinder device 22. The guide track 15 has a first straight or vertical section 23 and a second, arcuate section 24. The arcuate section 24 of the track is preferably equal to the arc defined by the quadrant of a circle, so that the welding jaw 16 moves substantially horizontally in its lower end position. In this lower end position, the first welding jaw is located immediately above an opening 25 in the deck 12. A second welding jaw 26 is arranged for movement through the opening 25, from a rest position beneath the deck, shown in Figure 2, to a welding position immediately above the deck, shown in Figure 3. This movement of the second welding jaw takes place about a shaft 27 located beneath the deck, and is effected with the aid of a piston-cylinder device 28 and a swing-arm 29. The second welding jaw 26, which cooperates with means, not shown, for heating the same to a suitable temperature for heat-fusing together two plastic-film webs, has an angular abutment surface 30, the apex 31 of which is guided into register with an elongate groove 32 extending along the first welding jaw and fitted with silicone rubber or a like material.

As illustrated in the drawings, the apparatus also includes an upper storage reel 42 and a lower storage reel 43, from which a first plastic-film web 40 and a second plastic-film web 41 are successively taken. The webs are guided and held suitably stretched by means of guide rollers 44. Arranged in the same plane as the deck 12 is an infeed means 45, which may have the form of an endless belt conveyer or a roller table. Arranged for movement along the deck 12 is a pusher 46, said pusher being moveable from a rest position, shown in the Figures, to an extended position, not shown, in which the leading edge 47 of the pusher is located somewhat further out (about 20 cm) than the vertical part of the rack 18. A clamping means 48 in the form of an eccentrically journalled roller is carried between the two frame parts 14. As shown in Figure 1, the frame parts 14 are each provided with a series of holes 49 into which attachments 50 on both ends of the roller 48 can be selectedly fitted, to adjust the height of the roller above the deck and therewith adapt the position of the roller to packages of mutually different size.

The mode of operation of the illustrated and described apparatus will now be described in more detail. The articles or goods to be packaged are fed successively on the infeed means 45 to a position in front of the pusher 46. When the requisite number of articles have been grouped in front of the pusher, they are pushed along the deck 12, in the direction of arrow 51, to a position corresponding to the outer terminal position of the pusher 46. While this movement of the articles to be packaged takes place, both the first and the second welding jaws are held withdrawn in their respective rest positions. During this infeed movement, the forward side and top and bottom sides of the package unit 13 are covered with plastic film. When the unit 13 is moved in towards the roller 48, the roller is swung up and brings pressure to bear on the upper side, thereby providing suitable dolly or holding means for the pusher 46, so that the rearward side of the package unit 13 is located precisely in relation to the welding jaws. The pusher 46 now returns to its starting position, whereafter the first welding jaw 16 commences its vertical downward movement, as illustrated in Figure 2. In so
doing, the first plastic-film web 40 is run around the
welding jaws 16, to gradually also cover the rearward
side of the package unit. When the welding jaw 16 reaches
the second, arcuate section 24 of the guide track 15 the
welding jaw 16 begins to move the package unit 13 forward,
causing the film envelope around the unit to tighten still
further. When the first welding jaw 16 reaches its terminal
position, the jaw is located immediately above the second
welding jaw 26, which is then moved up through the opening
25 in the deck 12, to clamp the two plastic-film webs 40,
41 between the first welding jaw 16 and the heated second
welding jaw 26, as shown in Figure 3. Subsequent to welding of the webs 40, 41, the heated jaws 26 is returned
to its position beneath the deck and the cold jaw 16 is
returned to its starting position above the movement path
of the units 13. During this return movement of the welding
jaws, the packaged unit is held firmly in position by the
weight of the roller 48 and also by a certain wedging
effect produced by the roller in relation to the package.
It is necessary to hold the package stationary in this
manner, since the plastic film often tends to stick to the
upper cold jaw 16. A further group of articles 52 (Figure 3)
can then be moved by the pusher 46 in towards the mutually
welded film webs 40, 41. When these further articles reach
the rearward side of the preceding packaged unit, they are
in alignment with said unit, at the same time as the packaged unit is advanced, so as, after a further wrapping
cycle, to reach the heating oven 53. The packaged unit is
heated in the oven 53 in a conventional manner, so as to
shrink the film webs around the unit and form a tight
envelope the. round, this envelope also at least partially
covering the sides of the units.

In the initial stages of its movement, the first welding
jaw 16 is located sufficiently far away from the package
unit 13 to avoid the risk of damaging the unit or changing its position during said movement. When the jaw is then moved forward, the film is further stretched around the unit, by friction against the support structure. This friction is amplified by the action of the clamping means 48 which also causes the film to pass tightly around the upper forward edge, when the unit is moved in towards the film. It will be noted that no additional flaps or like devices are needed to hold the package unit firm, and neither is it necessary to wait for the weld to cool before removing the film-wrapped unit away. Because the film wrapping is found closely moulded to the contours of the package unit upon completion of the welding operation, the time needed to treat the package with heat in the oven 53 is much shorter than with known shrink film apparatus.

Figure 4 is an overall view of a packaging machine which incorporates the apparatus described above with reference to Figures 1 to 3. For the sake of simplicity certain components of the described apparatus have been omitted from Figure 4. The machine locations of these omitted components and the manner in which they operate, however, will be evident from Figures 1 to 3.

Thus, the machine shown in Figure 4 includes a conventional oven, generally shown at 53, into which the wrapped packages are fed and heated to a given temperature, so as to shrink the film around the aforesaid articles and provide a tight envelope therearound. The oven co-acts with the support structure 11 carrying support deck 12. The Figure also illustrates the positions of film-storage reels 42 and 43 relative to the deck 12, and indicates in respect of reel 42 the manner in which the web of film taken from the reel 42 is held taut by the stretching means 44, e.g. the rollers shown in Figures 2 and 3. Also shown are the vertical frame parts 14 on respective sides of the deck 12. The distal frame part 14 as seen in the Figure is shown to carry the aforesaid rack 18 co-acting with pinion 21 mounted on the end of the first welding jaw 16, via the end of shaft 21 (not shown here), said jaw being raised and lowered by the piston cylinder device 22.

The Figure also illustrates the infeed table 45 and the reciprocatingly movable pusher 46. Conventional buttons (not referenced) for controlled machine operations are provided on the front of the machine.

The invention is not restricted to the described and illustrated embodiment but can be modified.

CLAIMS

1.   Apparatus for welding together two plastic-film webs (40,41) laid around one or more articles, to form a heat-shrinkable envelope therearound, said apparatus including a support surface (12) for supporting said article or articles in the form of a grouped unit (13), and a first (16) and a second (26) welding jaw, of which at least the first (16) is movable from a starting position above the support surface (12) in a manner to bring the film webs (40,41) together and to weld said webs in clamping co-action with the second jaw (26), characterized in that guide means (15) are arranged to guide the first welding jaw (16) towards the second welding jaw (26) along a path which is terminated in a path section (24) having an extension along the support surface (12), such that said first welding jaw (16) during its movement along said terminal path-section (24) is brought into abutment with said unit (13).

2.   Apparatus according to Claim 1, characterized in that said track includes a first section (23), which extends substantially at right angles to said support surface, and a second section (24) of arcuate configuration.

3.   Apparatus according to Claim 1 or Claim 2, characterized in that said second welding jaw (26) is arranged for movement between a rest position located beneath the support surface (12) and a welding position located in the same plane as the support surface or above said plane.

4.   Apparatus according to any one of the preceding Claims, characterized in that said guide means (15) comprises two guide tracks, one on each side of the movement path of said one or more articles along the support surface (12), and in that studs (19) projecting from a respective end of the first welding jaw (16) are guided in said tracks between a first position in which said welding jaw is located above said movement path, and a second position in which the welding jaw is located in its welding position adjacent the support surface.

5. Apparatus according to Claim 4, characterized in that each of the studs (19) comprises a respective end of an axle (20), and carries a respective toothed wheel (21) which is arranged for movement along a rack (18) located in said track.

6. Apparatus according to any one of the preceding Claims, characterized by clamping means (48) arranged at a distance from the welding jaws and downstream thereof as seen in the path of movements of said article or articles, for holding the film-wrapped unit (13) in position.

7. Apparatus according to Claim 6, characterized in that said clamping means includes a roller which is eccentrically journalled above the movement path of the package units (13) for abutment thereagainst.

8. Apparatus according to any one of the preceding Claims, characterized in that said second part (24) of the movement path of the first welding jaw has the shape of the arc defined by a quadrant of a circle.

Fig.1

0139621

Fig. 2

Fig. 3

Fig. 4

0139621

| | **DOCUMENTS CONSIDERED TO BE RELEVANT** | | EP 84850258.9 | |
|---|---|---|---|---|
| Category | Citation of document with indication, where appropriate, of relevant passages | Relevant to claim | CLASSIFICATION OF THE APPLICATION (Int. Cl.4) | |
| Y | DE - A1 - 2 824 753 (FA. W.KOPP) | 1,4 | B 65 B 9/02 | |
| A | | 6 | B 65 B 53/06 | |
| | -- | | | |
| Y | US - A - 4 319 443 (WATTS, JR.) * Column 17, lines 16-18 * | 1,4 | | |
| | -- | | | |
| A | US - A - 3 564 810 (FALETTI et al.) | 1,3,4, 5 | | |
| | -- | | | |
| A | US - A - 3 465 489 (MONAGHAN) * Fig. 14-16 * | 1,3,4 | | |
| | -- | | | |
| A | DE - A1 - 2 619 422 (B.V. MACHINEFABRIEK VERWACHTING) | 1,3,4 | **TECHNICAL FIELDS SEARCHED (Int. Cl.4)** | |
| | ---- | | B 29 C 65/00 | |
| | | | B 65 B 9/00 | |
| | | | B 65 B 11/00 | |
| | | | B 65 B 27/00 | |
| | | | B 65 B 51/00 | |
| | | | B 65 B 53/00 | |

The present search report has been drawn up for all claims

| Place of search | Date of completion of the search | Examiner |
|---|---|---|
| VIENNA | 20-12-1984 | MELZER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82